Europäisches Patentamt

**European Patent Office**

Office européen des brevets

(11) Numéro de publication: **0 239 473 B1**

---

(12) **FASCICULE DE BREVET EUROPEEN**

---

(45) Date de publication de fascicule du brevet:
**07.08.91**

(21) Numéro de dépôt: **87400586.1**

(22) Date de dépôt: **17.03.87**

(51) Int. Cl.⁵: **C08F 10/02, C08F 4/64**

---

(54) Procédé de polymérisation de l'éthylène permettant d'obtenir un polymère de distribution large de masses moléculaires.

---

(30) Priorité: **27.03.86 FR 8604411**

(43) Date de publication de la demande:
**30.09.87 Bulletin 87/40**

(45) Mention de la délivrance du brevet:
**07.08.91 Bulletin 91/32**

(84) Etats contractants désignés:
**AT BE CH DE ES FR GB IT LI LU NL SE**

(56) Documents cités:
**FR-A- 2 024 149**
**GB-A- 2 103 626**

(73) Titulaire: **ATOCHEM**
**4 & 8, Cours Michelet La Défense 10**
**F-92800 Puteaux(FR)**

(72) Inventeur: **Spitz, Roger**
**44, Rue des Fleurs Serezin**
**F-69360 St. Symphorien D'Ozon(FR)**
Inventeur: **Masson, Patrick**
**22, rue de Tourvielle**
**F-69005 Lyon(FR)**
Inventeur: **Lacombe, Jean-Loup**
**4, Impasse de Lau**
**F-64140 Lyons(FR)**

(74) Mandataire: **Foiret, Claude et al**
**ATOCHEM Département Propriété Industrielle**
**F-92091 Paris la Défense 10 Cédex 42(FR)**

---

Rank Xerox (UK) Business Services

## Description

La présente invention concerne un procédé de polymérisation de l'éthylène permettant d'obtenir un polymère de distribution large de masses moléculaires. Le résultat est obtenu grâce à la combinaison dans le procédé de polymérisation du catalyseur préparé selon un mode particulier et du cocatalyseur qui est alkylaluminium dont le nombre de carbone du radical alkyle est supérieur ou égal à 6. Le catalyseur à base de titane, de magnésium et de chlore, en absence de tout donneur d'électrons est préparé par prébroyage de $MgCl_2$ suivi d'un cobroyage de ce $MgCl_2$ avec $TiCl_4$. Il est entendu que par polymérisation de l'éthylène on entend non seulement l'homopolymérisation de l'éthylène, mais encore la copolymérisation de l'éthylène avec une alpha oléfine, telle que propylène, butène-1 ou encore hexène-1.

Dans le GB-A-2 103 626 est décrit un procédé de préparation de catalyseur par imprégnation, sans broyage, d'un composé de métal de transition sur un mélange résultant d'un cobroyage non contrôlé de $MgCl_2$ et d'un donneur d'électrons. Comme on peut le constater dans les essais 10 et 11 présentés dans la suite un tel procédé de préparation du catalyseur ne peut permettre d'obtenir ultérieurement un polymère de distribution large de masses moléculaires.

Les polymères de distribution large de masses moléculaires, utilisés industriellement en particulier dans les techniques d'extrusion soufflage, se distinguent par leur polydispersité et leur indice de fluidité des polymères de distribution étroite de masses moléculaires, utilisés industriellement en particulier pour l'injection.

Les polymères de distribution de masses moléculaires étroites possèdent en moyenne une polydispersité de 4 à 6 environ, la polydispersité étant le rapport de la masse moléculaire en poids sur la masse moléculaire en nombre. Ces polymères à forte fluidité possèdent un rapport d'indice de fluidité MFR de l'ordre de 2,8 à 3,3 ; ce MFR étant le rapport $MI_5/MI_2$ de l'indice de fluidité sous 5 kg sur l'indice de fluidité sous 2,16 kg selon la norme ASTM D 1238. Ces produits sont obtenus en monoréacteur par polymérisation de l'éthylène en suspension, en solution ou en phase gazeuse en présence d'un catalyseur spécifique du type Ziegler contenant du Ti, Mg, Cl et éventuellement un donneur d'électrons. Les produits obtenus de distribution étroite possèdent une élasticité limitée ce qui évite le phénomène néfaste de retrait à l'injection.

De tels produits, du fait de leur manque d'élasticité sont inadaptés aux techniques demandant une résistance mécanique importante à l'état fondu, comme par exemple dans le cas de l'extrusion soufflage. Lorsque ces propriétés sont recherchées, on utilise des polymères de distribution large de masses moléculaires possédant en moyenne une polydispersité supérieure à 13 et un rapport d'indice de fluidité MFR supérieur à 16 pour un indice de fluidité $MI_5$ de l'ordre de 1 à 1,5, le MFR étant le rapport $MI_{21}/MI_5$ de l'indice de fluidité sous 2,16 kg sur l'indice de fluidité sous 5 kg selon la norme ASTM D 1238. La fabrication industrielle de ces produits en monoréacteur présente de grandes difficultés en présence de catalyseur de type Ziegler.

Selon "Adv. in Polymer Science" 51 pp. 101 à 153 (1983) "Control of Molecular - Weight Distribution in Polyolefins Synthesized with Ziegler - $\overline{N}$atta Catalyst Systems" de U. Zucchini et G. Cecchin, document qui reflète par ailleurs l'art antérieur sur la question, le meilleur moyen pour obtenir un polymère de distribution large de masses moléculaires en présence d'un catalyseur du type Ziegler est d'effectuer la polymérisation en plusieurs étapes ou en "cascade" à partir de deux réacteurs successifs au moins. Toutefois même dans ces meilleures conditions il n'est pas facile de fabriquer un polyéthylène de MFR supérieur à 16, une condition nécessaire étant de partir de catalyseurs donnant des distributions larges en monoréacteur. En outre ce procédé présente l'inconvénient de nécessiter au moins deux réacteurs ce qui entraîne une perte de productivité par rapport à l'importance de l'installation et un contrôle délicat du fait de l'activité de plusieurs réacteurs au lieu d'un seul.

Toujours selon ce document, pour remédier aux inconvénients cités, des procédés en monoréacteur ont été envisagés. Un des procédés connus consiste à utiliser un catalyseur au chrome. La réaction d'un tel catalyseur nécessite un contrôle très sévère comparativement à la réaction en présence d'un catalyseur au titane. En outre cette technique nécessite une haute pureté des réactifs mis en oeuvre. Un autre procédé consiste à utiliser un catalyseur représenté par deux formules catalytiques ou constitué d'une seule formule catalytique mais contenant au moins deux métaux de transition déposés sur le même support. Le but de ce dernier procédé est d'obtenir du système catalytique les deux objectifs opposés suivants : d'une part présenter une sensibilité à l'hydrogène, agent de transfert, en même temps qu'une résistance à la réduction dans une première étape de polymérisation et d'autre part présenter une activité résiduelle élevée dans une seconde étape. Un inconvénient de ces systèmes catalytiques est de conduire parfois non pas à seul polymère de distribution large de masses moléculaires, mais à un mélange de particules de répartitions très différentes provenant en quelque sorte de deux types de polymérisation ; cette hétérogénéité du mélange peut entraîner des imperfections sur le matériau final transformé à partir de ces produits de polymérisation. En fait les éléments actifs de ces systèmes catalytiques ne réagissent pas en synergie, mais chacun séparément selon ses propres caractéristiques.

Le système catalytique selon l'invention permet de remédier à l'ensemble des inconvénients cités. Il permet d'une part, par une mise en oeuvre convenable de la polymérisation en cascade à 2 réacteurs, d'obtenir de façon inattendue un polymère de distribution de masses moléculaires très large, c'est-à-dire dont la polydispersité mesurée par GPC à chaud et correspondant au rapport de la moyenne en poids sur la moyenne en nombre de masses moléculaires des chaînes de polymère : $\frac{Mw}{Mn}$ est supérieure à environ 22 et d'autre part d'obtenir par polymérisation en monoréacteur un polymère de distribution large de masses moléculaires, c'est-à-dire dont le MFR $MI_{21}/MI_5$ est supérieur à 16.

L'objet de l'invention consiste à combiner deux moyens dans la polymérisation de l'éthylène à savoir :
- un catalyseur préparé dans des conditions particulières
et
- un cocatalyseur choisi dans une sélection d'alkylaluminiums.

Le procédé selon l'invention consiste à polymériser l'éthylène en présence d'un catalyseur à base de $MgCl_2$ et de $TiCl_4$ et d'un alkylaluminum comme cocatalyseur caractérisé en ce que le catalyseur est préparé par cobroyage du $TiCl_4$ et du $MgCl_2$, ce dernier ayant déjà été préalablement broyé seul et en ce que le cocatalyseur est choisi parmi les alkylaluminiums dont le nombre de carbone d'au moins un des radicaux alkyle est supérieur ou égal à 6.

Préalablement au cobroyage du $TiCl_4$ et du $MgCl_2$, il est nécessaire d'amener le $MgCl_2$ à une surface spécifique suffisante de l'ordre de $30 m^2/g$ au moins.

De façon industrielle, un bon moyen d'obtenir des $MgCl_2$ de grande surface spécifique est de procéder à un broyage, par tout moyen efficace connu, de $MgCl_2$ commercial anhydre avec une teneur en eau inférieure à 1% en poids.

Une fois amené à la valeur de surface spécifique voulue, le $MgCl_2$ est imprégné de $TiCl_4$. Cette imprégnation s'effectue à sec par cobroyage du $MgCl_2$ et du $TiCl_4$. Ce cobroyage doit être suffisamment efficace pour que le phénomène de colmatage observé couramment au cobroyage d'un solide et d'un liquide soit évité. Cela nécessite une surface spécifique élevée du solide avant l'étape de cobroyage et un rapport masse liquide / masse solide petit, la durée dépendant de l'appareil utilisé pour le cobroyage.

Les méthodes d'imprégnation du $TiCl_4$ sur le $MgCl_2$ sont nombreuses, les plus classiques étant la simple imprégnation en dispersion, ou encore le cobroyage unique du $MgCl_2$ et du $TiCl_4$. Toutefois, les performances obtenues avec ces pocédés ne permettent pas de parvenir dans la gamme des produits à distribution large. La modification apportée dans l'invention à la technique d'imprégnation aboutit à un effet surprenant et inexpliqué en ce que le système catalytique qui en découle, permet une amélioration très nette de l'élargissement de la masse moléculaire du polymère résultant de la polymérisation de l'éthylène sans que ce gain se fasse au détriment de la productivité. En outre afin d'obtenir les résultats indiqués, il est fortement recommandé de respecter dans le catalyseur les proportions de titane et de magnésium.

Il est en effet important, pour obtenir un élargissement sensible de la masse moléculaire qu'un rapport en poids

$$\frac{MgCl_2}{TiCl_4}$$

compris entre 6 et 60 soit respecté.

Ce rapport est obtenu directement lors du cobroyage en ajoutant au $MgCl_2$, de surface spécifique convenable, la quantité adaptée de $TiCl_4$.

Cependant la technique d'imprégnation de $MgCl_2$ selon l'invention est nécessaire, mais insuffisante pour obtenir le résultat escompté. Il faut encore que le catalyseur préparé à base de $MgCl_2$ et de $TiCl_4$ soit accompagné dans la polymérisation de l'éthylène d'un alkylaluminium comme cocatalyseur.

Habituellement dans la polymérisation de l'éthylène tous les alkylaluminiums sont recommandés, les plus utilisés étant le triéthylaluminium (TEA) et le triisobutylaluminium. Il est constaté que dans le cas précis où un polymère de distribution large de masses moléculaires doit être obtenu par polymérisation de l'éthylène en présence d'un catalyseur préparé par cobroyage de $TiCl_4$ et de $MgCl_2$, ce dernier ayant déjà été amené préalablement à une surface spécifique convenable, par exemple par broyage, le cocatalyseur doit être choisi parmi les alkylaluminiums dont au moins un des radicaux alkyle, linéaire ou ramifié, possède au moins six atomes de carbone. Les alkylaluminiums commerciaux particulièrement recommandés sont le trihexylaluminium (THA), le trioctylaluminium (TOA) et l'isoprénylaluminium (IPRA).

3

Le système catalytique selon l'invention, bien qu'utilisé de préférence dans la polymérisation de l'éthylène en monoréacteur, peut être utilisé dans le procédé de polymérisation en cascade dans des conditions particulières dans le but d'obtenir un polymère de distribution de masses moléculaires particulièrement large.

La polymérisation de l'éthylène en monoréacteur en présence du système catalytique de l'invention s'effectue selon les conditions connues des procédés classiques en suspension, en solution ou en phase gazeuse. La polymérisation en monoréacteur permet d'obtenir des produits de polydispersité, mesurée par le MFR $MI_{21}/MI_5$ comprise entre 16 et 20. De tels produits sont particulièrement retenus pour la technique d'extrusion soufflage.

Pour obtenir des produits de polydispersité nettement plus élevée, mesurée par GPC et supérieure à 22, il est recommandé de recourir à un procédé de polymérisation en deux étapes. Parmi les techniques envisageables la plus classique consiste à faire dans un premier réacteur une fraction de polymère de très basses masses moléculaires complétée dans un second réacteur par une fraction de très hautes masses moléculaires en jouant sur les conditions respectives : température, pression d'hydrogène, pression totale, durée des deux réactions. Cette méthode permet d'assurer une très grande productivité mais elle ne donne pas une distribution de masses moléculaires significativement plus large qu'en une seule étape. Par contre, la disposition inverse, appelée cascade inverse, des deux réacteurs ou des deux étapes de réaction, consistant à produire en premier les très hautes masses et en second les basses masses moléculaires permet d'exploiter le potentiel de ce système catalytique et d'élargir d'une façon remarquable les distributions de masses moléculaires. Un équilibre judicieux des productivités permet d'ajuster le grade et la largeur du polymère final.

Les exemples suivants illustrent l'invention sans toutefois la limiter.

EXEMPLE 1

Préparation du catalyseur

Dans deux broyeurs à bols et à billes d'acier les composants catalytiques sont introduits, broyés et prélevés sous atmosphère inerte. Les caractéristiques des deux broyeurs sont :

|  | N° 1 | N° 2 |
|---|---|---|
| Volume du bol | 80 ml | 350 ml |
| Masse de billes d'acier | 55 g | 180 g |

Le système d'agitation du système est du type DANGOUMAU à oscillation verticale avec une course de 6cm, une fréquence 7Hz et une accélération de 6g : environ 60m/sec$^2$

Les conditions de broyage sont données dans le tableau I.

Polymérisation de l'éthylène en monoréacteur

Dans un réacteur de 1,5l. en acier muni d'une agitation par pale tournant à 660 tours/minutes, on introduit dans l'ordre à température ambiante sous atmosphère inerte : 0,4l. d'heptane, le cocatalyseur et le catalyseur en quantités données dans le tableau I.

On ajoute de l'hydrogène jusqu'à une pression partielle de 3 bars et on complète avec de l'éthylène en ajustant la pression pour atteindre 8 bars absolus de pression totale après chauffage à 80°C. Cette pression totale est maintenue constante pendant environ 1 heure par addition d'éthylène.

La polymérisation achevée, on arrête l'injection d'éthylène, on refroidit à température ambiante. Le catalyseur est désactivé par addition d'une solution de méthanol légèrement acidifiée par de l'acide chlorhydrique (10 %). La suspension de polymère est filtrée puis séchée.

EXEMPLE 2

A partir du catalyseur de l'essai 1 de l'Exemple 1, on effectue deux polymérisations en cascade inverse et à titre comparatif (essai 14) en cascade droite.

4

La première étape de la réaction est effectuée comme dans l'exemple 1 avec les variantes de pression d'hydrogène, de température et de durée indiquées dans le tableau II.

A la fin de cette étape, le réacteur est refroidi très rapidement à température ambiante, la composition de la phase gazeuse est alors modifiée par addition ou dilution selon les cas pour réaliser les conditions indiquées dans le tableau II.

L'essai est alors poursuivi comme dans l'exemple 1 dans les conditions indiquées dans le tableau II pour la température, la pression totale est la durée de cette étape.

Les conditions de polymérisation et les résultats obtenus sont donnés dans le tableau II.

TABLEAU I

| Essais | N° bol de broyage | MgCl₂ en g | Temps de broyage | Surface spécifique m²/g support | TiCl₄ en ml | Temps de co-broyage en h et min | Caractéristique du cata Surface spécifique m²/g | Catalyseur mis en oeuvre en mg | Titane en % poids du cata | Cocatalyseur | Cocatalyseur mis en oeuvre en M/l | Productivité en g PE/g cata/h | $\frac{MI_{21}}{MI_5}$ | MI₅ |
|---|---|---|---|---|---|---|---|---|---|---|---|---|---|---|
| 1 | 2 | 30 | 6 | 31 | 1,5 | 9 | 42 | 59 | 1,8 | THA | $3.10^{-3}$ | 1800 | 19,7 | 1,55 |
| 2 | 2 | 30 | 6 | 31 | 1,5 | 9 | 42 | 45 | 1,8 | IPRA | $3.10^{-3}$ | 1300 a) | 16,1 | 0,8 |
| 3 | 2 | 30 | 6 | 31 | 1,5 | 9 | 42 | 42 | 1,8 | TOA | $5.10^{-3}$ | 1400 | 19,9 | 0,5 |
| 4 comparatif | 2 | 30 | 6 | 31 | 1,5 | 9 | 42 | 30 | 1,8 | TEA | $5.10^{-3}$ | 1500 | 10,6 | 2,5 |
| 5 comparatif | 1 | 7 | 4,45 | 40 | 2,0 | 17 | < 10 | 54 | 8,3 | IPRA | $3.10^{-3}$ | 600 b) | 15,1 | 1,2 |
| 6 comparatif | 1 | 10 | 6 | 45 | 1,0 | 16 | 26 | 54 | 3,7 | THA | $3.10^{-3}$ | 800 c) | 12,9 | 1 |

EP 0 239 473 B1

EP 0 239 473 B1

TABLEAU I (suite)

| Essais | N° bol de broyage | MgCl$_2$ en g | Temps de broyage | Surface spéci-fique m$^2$/g support | TiCl$_4$ en ml | Temps de co-broyage en h et min | Caracté-ristique du cata Surface spécifique m$^2$/g | Catalyseur mis en oeuvre en mg | Titane en % poids du cata | Coca-taly-seur | Cocata-lyseur mis en oeuvre en M/l | Producti-vité en g PE/g cata/h | $\frac{MI}{MI_5}21$ | MI$_5$ |
|---|---|---|---|---|---|---|---|---|---|---|---|---|---|---|
| 7 compa-ratif | 2 | 43 | 6 | 30 | 1,5 | 6 | 33,6 | 48 | 1,4 | THA | $3.10^{-3}$ | 1800 | 14,3 | 2 |
| 8 compa-ratif | 1 | 7,1 | 0 | 0 | 0,4 | 6 | 14 | 37 | 2 | THA | $3.10^{-3}$ | 300 | 10,2 | 2,3 |
| 9 compa-ratif | 1 | 7,1 | 0 | 0 | 0,4 | 12 | 19 | 50 | 2 | THA | $3.10^{-3}$ | 300 | 10,4 | 4,1 |
| 10 compa-ratif | 2 | 10 | 12 | 50 | 40 | 0 | 48 | 14 | 0,5 | THA | $3.10^{-3}$ | 2000 | 14,9 | 1,1 |
| 11 compa-ratif | 2 | 10 | 12 | 50 | 40 | 0 | 48 | 50 | 0,5 | TEA | $3.10^{-3}$ | 2500 | 9 | 4,5 |

a) Durée de polymérisation : 1 h 30
b) Durée de polymérisation : 2 h 30
c) Durée de polymérisation : 3 h

THA = Trihexylaluminium
TOA = Trioctylaluminium
TEA = Triéthylaluminium

IPRA = Isoprénylaluminium

TABLEAU II

| Essais | Catalyseur en mg | Cocatalyseur | Mol/l de Cocatalyseur | 1ère étape | | | | 2ème étape | | | Durée totale en heures | Productivité totale en g polymère par g de catalyseur |
|---|---|---|---|---|---|---|---|---|---|---|---|---|
| | | | | Pression hydrogène en bars | Température °C | Pression totale en bars | Durée en heures | Pression hydrogène en bars | Température °C | Pression totale en bars | | |
| 12 | 54 | THA | $3.10^{-3}$ | 2,0 | 80 | 8 | 0,4 | 5 | 85 | 9 | 1,5 | 2700 |
| 13 | 23 | THA | $3.10^{-3}$ | 2,5 | 80 | 8 | 0,8 | 5,5 | 85 | 9 | 4,0 | 3900 |
| 14 comparatif | 31 | THA | $3.10^{-3}$ | 4,5 | 85 | 8 | 2,5 | 1,5 | 80 | 8 | 3,0 | 4800 |

EP 0 239 473 B1

TABLEAU II (suite)

| Essai | Mw/Mn | Masse en poids Mw | $MI_5$ |
|---|---|---|---|
| 12 | 23,7 | 250.000 | 5,4 |
| 13 | 24,8 | 320.000 | 1,4 |
| 14 comparatif | 15,4 | 210.000 | 1,9 |

**Revendications**

1. Procédé de polymérisation de l'éthylène permettant d'obtenir un polymère de distribution large de masses moléculaires, en présence d'un catalyseur à base de $TiCl_4$ et de $MgCl_2$ et d'un alkylaluminium comme cocatalyseur caractérisé en ce qu'on polymérise en présence d'un catalyseur préparé par cobroyage de $TiCl_4$ et de $MgCl_2$ préalablement amené à une surface spécifique supérieure à $30 m^2/g$, le rapport de

$$\frac{MgCl_2}{TiCl_4}$$

en poids étant compris entre 6 et 60, le cocatalyseur étant choisi parmi les alkylaluminiums dont au moins un des radicaux alkyle possède au moins six atomes de carbone.

2. Procédé selon la revendication 1 caractérisé en ce que le $MgCl_2$ est broyé seul préalablement au cobroyage avec le $TiCl_4$.

3. Procédé selon l'une des revendications 1 à 2 caractérisé en ce que la polymérisation s'effectue en monoréacteur.

4. Procédé selon l'une des revendications 1 à 2 caractérisé en ce que la polymérisation est effectuée en cascade inverse de façon à obtenir un polymère dont la polydispersité est supérieure à 22.

**Claims**

1. A process for the polymerization of ethylene, enabling a polymer to be obtained having a wide distribution of molecular masses, in the presence of a catalyst based on $TiCl_4$ and $MgCl_2$ and an alkylaluminium as cocatalyst, characterized in that polymerisation is performed in the presence of a catalyst prepared by grinding together $TiCl_4$ and $MgCl_2$ previously brought to a specific surface greater than $30 m^2/g$, the

$$\frac{MgCl_2}{TiCl_4}$$

9

ratio by weight being between 6 and 60, the cocatalyst being selected from the alkyl aluminiums at least one of whose alkyl radicals has at least six carbon atoms.

2. A process according to claim 1, characterized in that the MgCl₂ is ground on its own prior to being ground together with the TiCl₄.

3. A process according to either of claims 1 and 2, characterized in that polymerization is performed in a monoreactor.

4. A process according to either of claims 1 and 2, characterized in that polymerization is performed in reverse cascade, so as to obtain a polymer whose polydispersity is greater than 22.

**Patentansprüche**

1. Verfahren zur Polymerisation von Ethylen in Gegenwart eines Katalysators auf der Grundlage von TiCl₄ und MgCl₂ und eines Alkylaluminiums als Cokatalysator zum Erhalt eines Polymeren mit breiter Molekulargewichtsverteilung, dadurch gekennzeichnet, daß man in Gegenwart eines Katalysators polymerisiert, der durch gemeinsames Vermahlen von TiCl₄ und zuvor auf eine spezifische Oberfläche von größer als 30 m²/g gebrachtem Mgcl₂ hergestellt ist, wobei das Gewichtsverhältnis MgCl₂/TiCl₄ zwischen 6 und 60 beträgt und der Cokatalysator aus den Alkylaluminiumverbindungen ausgewählt ist, in denen Wenigstens einer der Alkylreste wenigstens sechs Kohlenstoffatome aufweist.

2. Verfahren nach Anspruch 1, dadurch gekennzeichnet, daß das MgCl₂ vor dem gemeinsamen Vermahlen mit TiCl₄ alleine gemahlen wird.

3. Verfahren nach Anspruch 1 oder 2, dadurch gekennzeichnet, daß die Polymerisation in einem einzigen Reaktor durchgeführt wird.

4. Verfahren nach Anspruch 1 oder 2, dadurch gekennzeichnet, daß die Polymerisation in einer umgekehrten Kaskade derart durchgeführt wird, daß man ein Polymeres erhält, dessen Polymolekularitätsindex größer als 22 ist.